# EUROPÄISCHE PATENTSCHRIFT

(11) **EP 0 699 923 B1**
(45) Veröffentlichungstag und Bekanntmachung des Hinweises auf die Patenterteilung: **29.12.1999**
(21) Anmeldenummer: 95111149.1
(22) Anmeldetag: 17.07.1995
(51) Int. Cl.: G01S 13/93, G01S 7/03

(54) **Radargerät**
Radar apparatus
Dispositif radar

(30) Priorität: 08.08.1994 DE 4427970
(43) Veröffentlichungstag der Anmeldung: 06.03.1996
(73) Patentinhaber: SIEMENS AKTIENGESELLSCHAFT, 80333 München (DE)
(72) Erfinder: von Pieverling, Klaus, Dr., D-82515 Wolfratshausen (DE)

(56) Entgegenhaltungen:
- EP-A- 0 634 667
- WO-A-92/01951
- DE-A- 3 740 142
- GB-A- 2 042 300
- GB-A- 2 160 023
- US-A- 3 852 743

## Beschreibung

Die Erfindung bezieht sich auf ein Radargerät mit mehreren Antennenstrahlern bzw. -empfängern zur Bildung mehrerer Kanäle mit zumindest einem Gunn-Oszillator und Detektor-Dioden sowie einer Kanalumschaltung.

Bisher bekannte Radargeräte, insbesondere Verkehrsradargeräte, arbeiten derzeit üblicherweise im Frequenzbereich von 10 bis 35 GHz mit einem Antennenstrahl. Die zunehmende Frequenzknappheit erfordert ein Ausweichen in höhere Frequenzbänder, beispielsweise in einem Frequenzbereich von 77 GHz. Dieser hohe Frequenzbereich hat den Vorteil eines breiten Frequenzbandes und kleiner Antennen. Er hat jedoch auch den Nachteil, daß teure Komponenten, insbesondere Halbleiter zur Leistungserzeugung erforderlich sind. Ein Nachteil besteht auch darin, daß in dem sehr hohen Frequenzbereich die Antennenkeulen verhältnismäßig schmal sein müssen, wenn man Objekte in größeren Abständen orten will. Eine schmale Antennenkeule erfordert dann jedoch mehrere Antennenstrahler vorzusehen, z.B. bei der Verwendung für ein Fahrzeug-Hindernisradar, insbesondere zum Erfassen der Hindernisse im Kurvenbereich.

Aus diesem Grunde wurde bereits ein Radardetektorsystem vorgeschlagen, wie es in der EP-0 498 524-A2 beschrieben ist. Dort ist ein Verkehrs- insbesondere Abstands-Radargerät für Straßenfahrzeuge zur Kollisionsverhinderung geoffenbart, welches nicht nur in der Fahrspur ausgerichtet ist, sondern auch ein Objekt außerhalb davon, also links oder rechts daneben erkennen kann, was gerade im Kurvenbereich wichtig ist. Das bekannte Fahrzeug-Hindernisradar weist eine eigene Sendeantenne mit breitem Sendestrahl auf und eine Empfangsantennenanordnung für drei Empfangsstrahlen mit relativ schmalen Empfangskeulen. Dabei kann die Empfangsrichtung variiert werden.

Aufgabe der Erfindung ist es, ein derartiges Radargerät weiterzubilden und einfacher zu gestalten.

Diese Aufgabe wird mit einem eingangs geschilderten Radargerät dadurch gelöst, daß ein Gunn-Oszillator die Sendeleistung auf der halben Frequenz der vorgesehenen Sendefrequenz für sämtliche Antennenstrahler erzeugt, daß die im jeweiligen Hohlleiterübergang zum Antennenstrahler angeordnete Detektor-Diode in Senderichtung als Frequenzverdoppler und in Empfangsrichtung als Empfangsmischer sowie als Kanalumschalter arbeitet, daß der jeweilige Hohlleiterübergang zugleich als Hochpaß ausgebildet ist, wobei der Hohlleiterübergang zwischen der Detektor-Diode und dem Antennenstrahler derart verengt ist, daß nur Oberwellen existieren und die Grundwelle an der Detektor-Diode nicht kurzgeschlossen wird, und daß die Empfangssignale an einem gemeinsamen Summenpunkt der Detektordioden zur Weiterverarbeitung abgreifbar sind.

Die Erfindung geht von einer Radarantenne mit mehreren Radarempfangs- bzw. sendestrahlern aus. Erfindungsgemäß werden die Sendesignale auf der halben Frequenz, also bei beispielsweise 38,5 GHz erzeugt und auf drei Kanäle aufgeteilt. In jedem Kanal sitzt ein mit einer Diode arbeitender Frequenzverdoppler. Erfindungsgemäß ist der Verdoppler so ausgestaltet, daß er zusätzlich die Funktion des Empfangsmischers und des Kanalumschalters erfüllt. Dabei ist der Hohlleiterübergang auch als Hochpaß ausgebildet, wobei der Hohlleiter oberhalb der Diode eine Verengung aufweist, so daß nur die Oberwellen existieren können. Der Übergang ist so gestaltet, daß an der Diode die Grundwelle nicht kurzgeschlossen wird. Erfindungsgemäß arbeitet die Detektor-Diode in Senderichtung als Frequenzverdoppler, in Empfangsrichtung als Empfangsmischer und gleichzeitig als Kanalumschalter.

In einer vorteilhaften Weiterbildung der Erfindung werden die Detektor-Dioden zur Kanalumschaltung mit einer bestimmten Steuer-Spannung beaufschlagt. Auf diese Weise wird verhältnismäßig einfach das Umschaltproblem gelöst. Dabei ist die Steuer-Spannung so ausgelegt, daß in den abgeschalteten zweigen möglichst wenig Oberwellen entstehen, beispielsweise durch das Anlegen einer vorgebbaren Sperrspannung.

Das erfindungsgemäße Radargerät weist somit einen Mikrowellenteil auf, welcher äußerst preisgünstig realisiert werden kann.

Um noch vorhandene Oberwellen vor dem Austritt zum eigentlichen Antennenstrahler zu filtern, weist der Hohlleiterquerschnitt im Bereich zum Antennenstrahler hin besonders ausgestaltete Rillen auf, so daß sich Diskontinuitäten bilden können und somit eine Bandpaßwirkung erzielt werden kann.

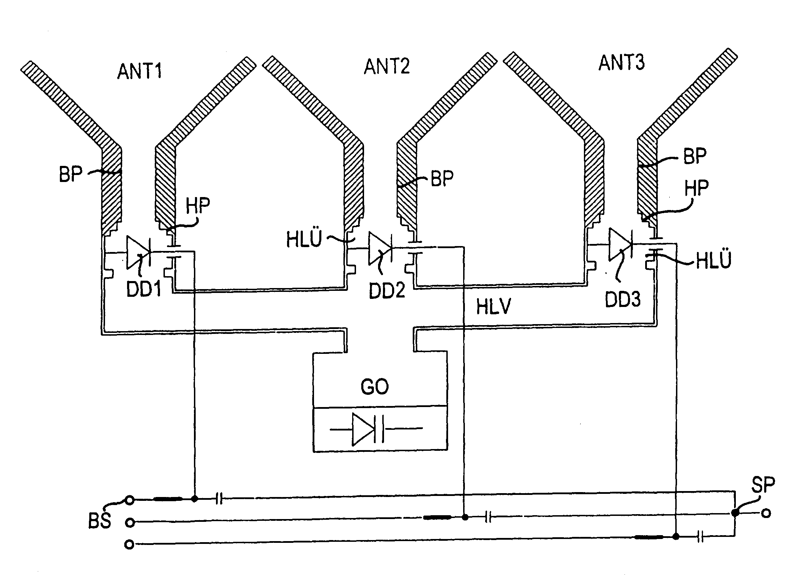

Anhand der einzigen Figur wird in einem Blockschaltbild die Erfindung prinzipiell erläutert. Das Blockschaltbild zeigt am Beispiel eines FMCW-Radargeräts drei Antennenstrahler ANT 1,2,3 für 77 GHz. Erfindungsgemäß werden die Sendesignale auf der halben Frequenz mittels des Gunn-Oszillators GO erzeugt und über einen Hohlleiterverteiler HLV auf drei Kanäle aufgeteilt. In jedem Kanal sitzt ein mit der Diode DD 1,2,3 arbeitender Verdoppler. Das wesentliche der Erfindung besteht in der Ausgestaltung dieses Verdopplers, so daß er zusätzlich die Funktion des Empfangsmischers und des Kanalumschalters erfüllt. Bei CW- und FMCW-Radargeräten ist es üblich, für Senden und Empfangen nur eine Antenne zu benützen. Die Kanal umschaltung erfolgt dadurch, daß die nicht eingeschalteten Mischerdioden, d.h. zwei der drei Detektor-Dioden DD 1,2,3 durch eine Steuer-Spannung BS so beaufschlagt sind, daß möglichst wenig Oberwellen entstehen. Dies geschieht beispielsweise durch das Anlegen einer bestimmten Sperrspannung.Die eingeschaltete Diode wird hingegen mit einer Steuer-Spannung beaufschlagt, die möglichst starke Oberwellen erzeugt. Die Empfangssignale der drei Kanäle von den Antennen ANT 1,2,3 werden an einem gemeinsamen Summenpunkt SP abgegriffen und weiterverarbeitet. Der Hohlleiterübergang HLÜ ist oberhalb der Detektor-Diode DD 1,2,3 jeweils so verengt, daß nur Oberwellen existieren. Dabei ist der Übergang so gestaltet, daß an der Diode die Grundwelle nicht kurzgeschlossen wird. In diesem Bereich fungiert der Hohlleiterübergang als Hochpaß HP. Der Hohlleiter weist im Bereich zum Antennenstrahler ANT 1,2,3 hin eingebrachte Rillen zur Bildung von Diskontinuitäten auf, so daß hier ein Oberwellenfilter entsteht und dieser Bereich als Bandpaß BP ausgebildet ist.

Gemäß der im Blockschaltbild dargestellten Anordnung entstehen auch keine großen ZF-Signale, so daß die drei Empfangssignale verbunden werden können und an dem Summenpunkt SP abgegriffen werden können. Bei einer geschickten Dimensionierung der Impedanzverhältnisse ist auch möglich, am Grundwellenverteilerpunkt jeweils eine hohe Impedanz für die nicht eingeschalteten Antennenwege zu erzeugen. Es können für den Verdoppler auch Gegentaktanordnungen mit zwei Mischerdioden eingesetzt werden. Dabei ist jedoch die phasenrichtige Addition der Empfangssignale zu beachten.

## Patentansprüche

1. Radargerät mit mehreren Antennenstrahlern bzw. -empfängern (ANT 1,2,3) zur Bildung mehrerer Kanäle mit zumindest einem Gunn-Oszillator (GO) und Detektor-Dioden (DD) sowie einer Kanalumschaltung,
**dadurch gekennzeichnet**, daß der Gunn-Oszillator (GO) die Sendesignale auf der halben Frequenz (f/2) der vorgesehenen Sendefrequenz (z.B. f=77 GHz) für sämtliche (n; z.B. n=3) Antennenstrahler erzeugt (ANT 1,2,3), daß die im jeweiligen Hohlleiterübergang (HLÜ) zum Antennenstrahler (ANT 1,2,3) angeordneten Detektor-Dioden (DD 1,2,3) in Senderichtung sowohl als Frequenzverdoppler und in Empfangsrichtung als Empfangsmischer sowie als Kanalumschalter arbeiten, daß der jeweilige Hohlleiterübergang (HLÜ) zugleich als Hochpaß (HP) ausgebildet ist, wobei der Hohlleiterübergang (HLÜ) zwischen der Detektor-Diode (DD 1,2,3) und dem Antennenstrahler (ANT 1,2,3) derart verengt ist, daß nur Oberwellen existieren und die Grundwelle an der Detektor-Diode nicht kurzgeschlossen ist, und daß die Empfangssignale an einem gemeinsamen Summenpunkt (SP) der Detektor-Dioden zur Weiterverarbeitung abgreifbar sind.

2. Radargerät nach Anspruch 1,
**dadurch gekennzeichnet**, daß zur Kanalumschaltung die Detektor-Dioden (DD 1,2,3) mit einer bestimmten Steuer-Spannung (BS) beaufschlagt sind, so daß möglichst wenig Oberwellen entstehen.

3. Radargerät nach Anspruch 1 oder 2,
**dadurch gekennzeichnet**, daß der Hohlleiterquerschnitt im Bereich zum Antennenstrahler (ANT 1,2,3) hin als Bandpaß (BP) ausgebildet ist, wobei besonders ausgestaltete Rillen zur Bildung von Diskontinuitäten angeordnet sind.

4. Radargerät nach einem der Ansprüche 1 bis 3,
**dadurch gekennzeichnet**, daß es als Verkehrsradargerät zur Erkennung von Hindernissen, z.B. als Abstandsradar, verwendet wird.

5. Radargerät nach einem der Ansprüche 1 bis 3,
**dadurch gekennzeichnet**, daß es als Bewegungsmelder zur Detektion von Eindringlingen verwendet wird.

## Claims

1. Radar having a plurality of antenna transmitters and receivers (ANT 1, 2, 3) in order to form a plurality of channels having at least one Gunn oscillator (GO) and detector diodes (DD) as well as a channel changing device,
characterized in that the Gunn oscillator (GO) produces the transmission signals at half the frequency (f/2) of the intended transmission frequency (for example f = 77 GHz) for all (n; e.g. n = 3) of the antenna radiating elements (ANT 1, 2, 3), in that the detector diodes (DD 1, 2, 3) which are arranged in the respective waveguide junction (HLÜ) to the antenna radiating element (ANT 1, 2, 3) operate in the transmitting direction both as a frequency doubler and, in the receiving direction as a receiving mixer, as well as a channel changeover switch, in that the respective waveguide junction (HLÜ) is at the same time designed as a high-pass filter (HP), in which case the waveguide junction (HLÜ) is narrowed between the detector diode (DD 1, 2, 3) and the antenna radiating element (ANT 1, 2, 3) in such a manner that only harmonics exist, and the fundamental is not shortcircuited at the detector diode, and in that the received signals can be tapped off at a common sum point (SP) of the detector diodes for further processing.

2. Radar according to Claim 1,
characterized in that the detector diodes (DD 1, 2, 3) have a specific control voltage (BS) applied to them for channel changing, so that as few harmonics as possible are produced.

3. Radar according to Claim 1 or 2,
characterized in that the waveguide cross section in the region towards the antenna radiating element (ANT 1, 2, 3) is designed as a bandpass filter (BP), in which case specially designed grooves are arranged in order to form discontinuities.

4. Radar according to one of Claims 1 to 3,
characterized in that this radar is used as a traffic radar in order to identify obstructions, for example as a separation radar.

5. Radar according to one of Claims 1 to 3,
characterized in that this radar is used as a movement alarm for the detection of intruders.

## Revendications

1. Appareil radar comportant plusieurs émetteurs ou récepteurs (ANT 1, 2, 3) d'antenne pour former plusieurs canaux, comportant au moins un oscillateur (GO) de Gunn et des diodes (DD) de détecteurs, ainsi qu'une commutation de canal,
caractérisé en ce que l'oscillateur (GO) de Gunn produit les signaux d'émission à la moitié (f/2) de la fréquence d'émission prévue (par exemple f = 77 GHz) pour tous (n ; par exemple n = 3) les émetteurs (ANT 1, 2, 3) d'antenne, en ce que les diodes (DD 1, 2, 3) de détecteurs montées dans chaque jonction (HLÜ) de guide d'ondes avec l'émetteur (ANT 1, 2, 3) d'antenne travaillent dans la direction d'émission comme doubleur de fréquence et dans la direction de réception comme mélangeur de réception, ainsi que comme commutateur de canal, en que la jonction (HLÜ) de guide d'ondes associé est réalisée en même temps en passe-haut (HP), la jonction (HLÜ) de guide d'ondes entre la diode (DD 1, 2, 3) de détecteur et l'émetteur (ANT 1, 2, 3) d'antenne étant rétrécie de manière qu'il n'existe que des harmoniques et que l'onde fondamentale ne soit pas court-circuitée sur la diode de détecteur, et en ce que les signaux de réception peuvent être prélevés pour le traitement ultérieur à un point (SP) de sommation commun des diodes de détecteur.

2. Appareil radar suivant la revendication 1,
caractérisé en ce que , pour la commutation de canal, il est appliqué aux diodes (DD 1, 2, 3) de détecteur une tension (BS) de commande déterminée, si bien qu'il se forme aussi peu d'harmoniques que possible.

3. Appareil radar suivant la revendication 1 ou 2,
caractérisé en ce que la section transversale de guide d'ondes dans la zone tournée vers l'émetteur (ANT 1, 2, 3) d'antenne est réalisée en passe-bande (BP), des rainures spécialement réalisées étant ménagées pour former des discontinuités.

4. Appareil radar suivant l'une des revendications 1 à 3,
caractérisé en ce qu'il est utilisé comme appareil radar pour la circulation pour reconnaître des obstacles, par exemple comme radar d'évaluation de distance.

5. Appareil radar suivant l'une des revendications 1 à 3,
caractérisé en ce qu'il est utilisé comme dispositif de signalisation de mouvements pour détecter des intrus.
